(19) Europäisches Patentamt / European Patent Office / Office européen des brevets

(11) **EP 4 551 840 B1**

(12) **EUROPEAN PATENT SPECIFICATION**

(45) Date of publication and mention
of the grant of the patent:
**15.04.2026 Bulletin 2026/16**

(21) Application number: **23741975.9**

(22) Date of filing: **26.06.2023**

(51) International Patent Classification (IPC):
*F16H 1/28* (2006.01)    *B60K 17/04* (2006.01)
*F16H 57/00* (2012.01)   *F16H 1/26* (2006.01)
*F16H 1/48* (2006.01)    *B60K 7/00* (2006.01)
*F16D 3/18* (2006.01)    *F16D 1/10* (2006.01)
*F16D 1/12* (2006.01)

(52) Cooperative Patent Classification (CPC):
**F16H 1/2845; B60K 7/0007; B60K 17/046;
F16H 1/26; F16H 1/48; F16H 57/0006;
F16H 57/0025;** B60K 2007/0038; B60K 2007/0061;
B60Y 2200/91; F16D 1/101; F16D 1/12;
F16D 3/185; F16D 2001/103; F16H 1/2818

(86) International application number:
**PCT/EP2023/000040**

(87) International publication number:
**WO 2024/008327 (11.01.2024 Gazette 2024/02)**

(54) **GEAR-REDUCING DEVICE AND GEAR-MOTOR AND VEHICLE PROVIDED WITH GEAR-REDUCING DEVICE**

REDUKTIONSGETRIEBE UND GETRIEBEMOTOR UND FAHRZEUG MIT REDUKTIONSGETRIEBE

DISPOSITIF DE RÉDUCTION À ENGRENAGES ET MOTEUR À ENGRENAGES ET VÉHICULE ÉQUIPÉ D'UN DISPOSITIF DE RÉDUCTION À ENGRENAGES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.07.2022 IT 202200014494**

(43) Date of publication of application:
**14.05.2025 Bulletin 2025/20**

(73) Proprietor: **PMP Pro-Mec S.p.A.
33030 Coseano (UD) (IT)**

(72) Inventor: **POZZO Riccardo
33030 Coseano (UD) (IT)**

(74) Representative: **D'Agostini, Giovanni et al
D'Agostini Organizzazione S.r.l.
Via G. Giusti 17
33100 Udine (IT)**

(56) References cited:
**WO-A1-2007/022865    US-A- 2 939 346
US-A- 4 090 416**

## Description

TECHNICAL FIELD

The present invention relates to a gear-reducing device and to a gear-motor for direct drive to the wheel of an electric-traction vehicle and electric-traction vehicle provided with such gear-reducing device according to the characteristics of the pre-characterizing part of the main claims.

PRIOR ART

In the field of the transmission of motion to driving wheels of electric-traction vehicles in general, such as for example in particular industrial vehicles like tractors, lift trucks, operating machines, the use of gear motors is known in which an electric motor is associated with a mechanical gear-reducing device transmitting the motion to the wheels.

Steering is managed by an electric system, monitoring signals coming from the speed sensors present on each of the two motors arranged on a couple of opposed wheels of the vehicle and form a transducer measuring the steering angle.

The current trend goes towards the use of increasingly faster and compact electric motors, so as to reduce the external dimensions of the gear-motor system and the end users require increasingly silent motors.

Application WO2007022865 in the name of the same applicant describes a gear-motor for direct drive to the wheel of an electric-traction vehicle in which the traction motor is integrated with a reduction transmission connected to the driving-wheel, and in which the traction motor includes a passing driving axle including a pinion on the wheel side which internally gears to the reducer-transmission system integrated with the wheel for the traction motion in a corresponding gear chamber and on the side opposite to the wheel it is keyed to a braking system, which is also integrated, and cased with the same assembly, in a corresponding opposite braking chamber forming a detachable motor-brake assembly and in which the transmission reducing group is housed in a structural supporting casing connectable to the vehicle and the motor group has its supporting casing fixed as a cover to the structural supporting casing covering the reducing system and allowing free access after its opening.

Application WO 2013/102484 describes a gear-motor for direct drive to the wheel of an electric-traction vehicle in which a traction motor is integrated with a gear-reducing device connectable to the driving-wheel of the electric-traction vehicle in correspondence with a hub, in which the gear-reducing device is housed into a structural supporting box connectable to the vehicle by means of fixing holes, the traction motor having a supporting casing fixed to the box as a cover, the box and the cover constituting a single structural supporting casing of the gear-motor, in which the traction motor is a motor whose transmission shaft is coupled in correspondence of a first pinion of the gear-reducing device or is integral with it and in which the motor control inverter is housed in correspondence of the closure head of the motor.

Application US2939346A describes a two-step gear reduction mechanism comprising a first step and a second planetary step placed immediately adjacent the first step, the first step comprising pinion and reduction gear, a couple of shafts, one of the shafts being integral with the reduction gear of the first step, the other shaft being integral with the planetary of the second step, the shafts being connected at their ends remote from the respective gear units by means of loosely mating splines permitting oscillation of the planetary gear in a normal plane to the axis of rotation.

Application US4090416 describes a gear box serving as a transmission coupling between co-axial shafts of which one driving shaft and one driven shaft, in which a gear train is present within a casing of the gear box coupled with these shafts by means of flexible joints which are arranged inside the casing about the centers of the bearings on which the casing is mounted.

PROBLEMS OF THE PRIOR ART

The solutions of the prior art are usually poorly suitable for compact motors, which are characterized by high rotational speeds.

Furthermore, the solutions of the prior art have large dimensions, also because of the use of motors with large dimensions, with the result that they are subject to higher costs and also to higher weight and dimensions of the vehicles using those devices.

In order to generally reduce as far as possible, the dimensions of the gear-motor, usually efforts are made to reduce the electric motor, applying reduction ratios such that the motor can reach, for example, speeds of 8000-12000 rounds per minute. In this way, it is possible a reduction in the dimensions of the motor of 50% c.a., with respect to traditional motors for this kind of use, which operate at a speed of about 5000 rounds per minute.

However, by increasing the motor speed, a higher noise occurs, besides an increase in the vibrations, which may generate in the system of the gear-motor as a whole.

The use of increasingly compact motors and of motors with an increasingly higher speed, poses greater challenges in obtaining a transmission as silent as possible

The solutions of the prior art are, therefore, both noisy and subject to vibrations with the consequence that they are uncomfortable for the user who maneuvers the vehicle. Furthermore, the presence of vibrations may cause additional problems, such as early wear of the components of the gear-motor, loosening of the fixing systems of the gear-motor to the vehicle, transmission of vibrations to the vehicle, subjecting the same to unwanted stressful conditions and mechanical stress.

Furthermore, there are problems regarding the fact that the gear-motor, which is closed inside its box, is sensitive to mechanical deformations undergone by the same box due to the load of the wheel acting on the hub of the gear-motor in the different working conditions.

AIM OF THE INVENTION

The aim of the present invention is to provide a gear-reducing device and a gear-motor for direct transmission to the wheel of an electric-traction vehicle and electric-traction vehicle provided with such a gear-reducing device, which is provided with arrangements for limiting the transmission of vibrations and their effect on the internal components of the gear-motor.

CONCEPT OF THE INVENTION

The aim is achieved by means of the characteristics of the main claim, thanks to the adoption of a gear-reducing device with a pinion movably supported on axes different from the axis of rotation of the pinon.

The sub-claims represent advantageous solutions.

ADVANTAGEOUS EFFECTS OF THE INVENTION

The solution according to the present invention, by the considerable creative contribution the effect of which constitutes an immediate and important technical progress, has various advantages.

The gear- reducing device according to the present invention is quieter than the solutions of the prior art, which adopt gear-reducing devices coupled to high-speed electric motors.

Advantageously, the gear- reducing device structure according to the present invention is less subject to mechanical stress caused by the forces induced through the wheel hub.

DESCRIPTION OF THE DRAWING

In the following a solution is described with reference to the enclosed drawings, which are to be considered as a non-limiting example of the present invention in which:

Fig. 1 shows a sectional view of a gear-motor of the prior art.

Fig. 2 shows a detail in sectional view of a gear-motor of the prior art.

Fig. 3 shows a detail in sectional view of a gear-motor of the prior art.

Fig. 4 shows an exploded view of the gear-motor including the gear-reducing device according to the invention.

Fig. 5 shows an exploded view of the part of the motor of the gear-motor of Fig. 4.

Fig. 6 shows a view of the part of the motor of the gear-motor of Fig. 4.

Fig. 7 shows a sectional view of the gear-motor comprising the gear-reducing device according to the invention.

Fig. 8 shows a detail in sectional view of a portion of the gear-reducing device according to the invention.

Fig. 9 shows a detail in sectional view of a portion of the gear-reducing device according to the invention.

Fig. 10 shows a perspective view of the second pinion of the gear-reducing device according to the invention.

Fig. 11 shows a sectional view of the second pinion of the gear-reducing device according to the invention.

Fig. 12 shows a view of the detail of a portion of the second pinion.

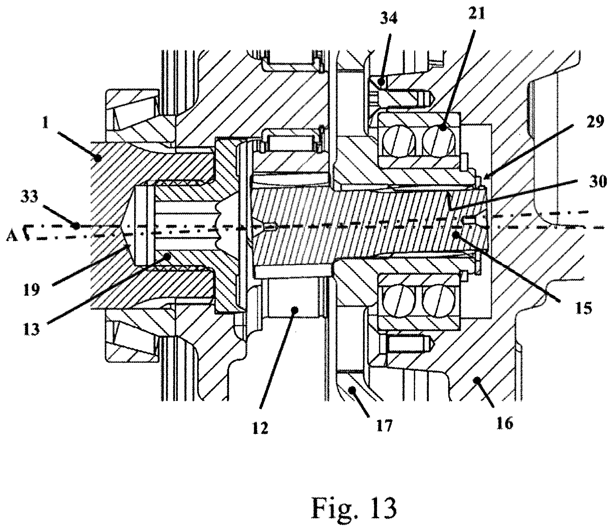

Fig. 13 shows a detail in sectional view of the gear-reducing device according to the invention, under stress conditions.

Fig. 14 shows a noise diagram of a solution of the prior art.

Fig. 15 shows a noise diagram of the solution according to the invention.

Fig. 16 schematically shows a vehicle integrating the gear-motor according to the invention.

DESCRIPTION OF THE INVENTION

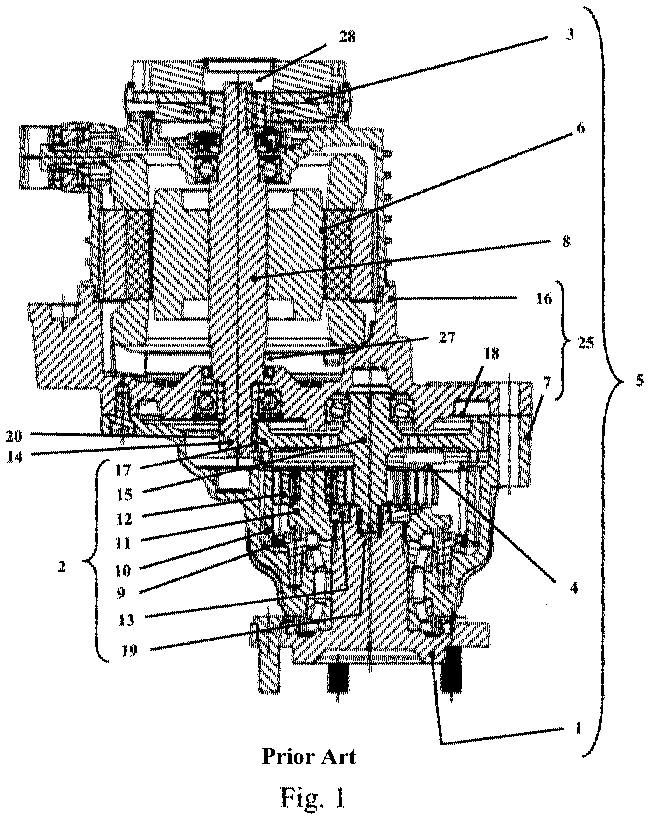

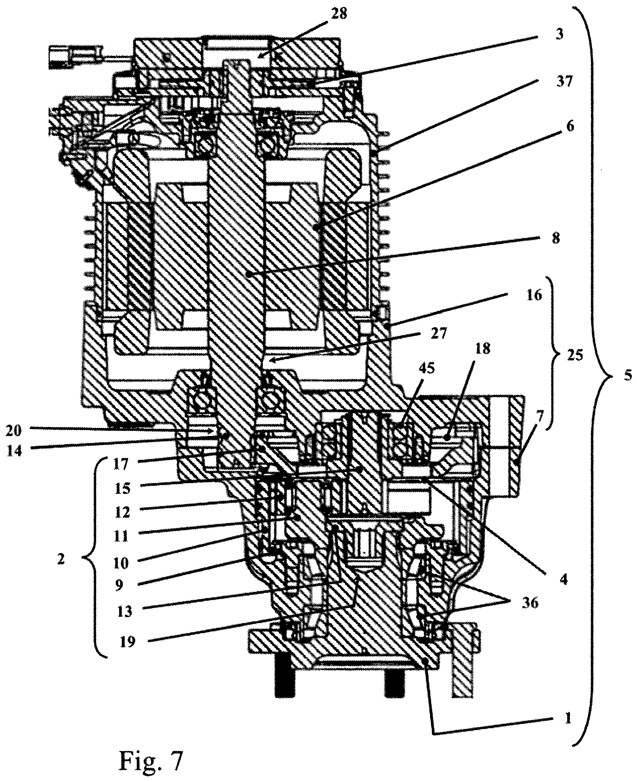

With reference to the figures (Fig. 1, Fig. 2, Fig. 3), the solutions according to the prior art and also the solution according to the invention (Fig. 7, Fig. 8, Fig. 9) regarding a gear-motor (5) comprising a motor (6), which is mechanically connected to a corresponding gear- reducing device (4), are generally conceived in such a way that gear- reducing device (4) and the motor (6) are two different and separate entities, which are mechanically coupled with each other by means of the motor shaft (8) of the motor (6), also forming the coupling end (14) of the gears (2) of the reduction stage of the gear- reducing device (4). The motor shaft (8) is rotatably supported in a constrained way inside the motor (6) and protrudes (Fig.

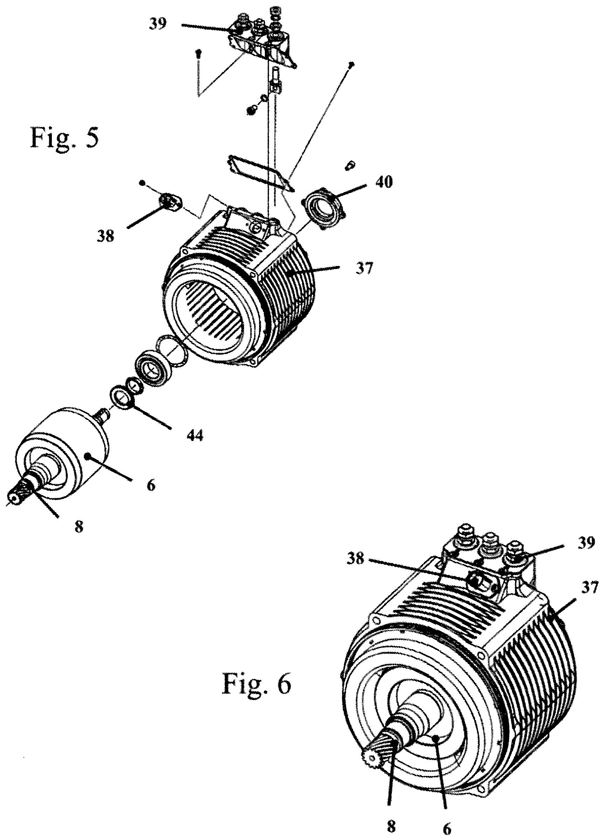

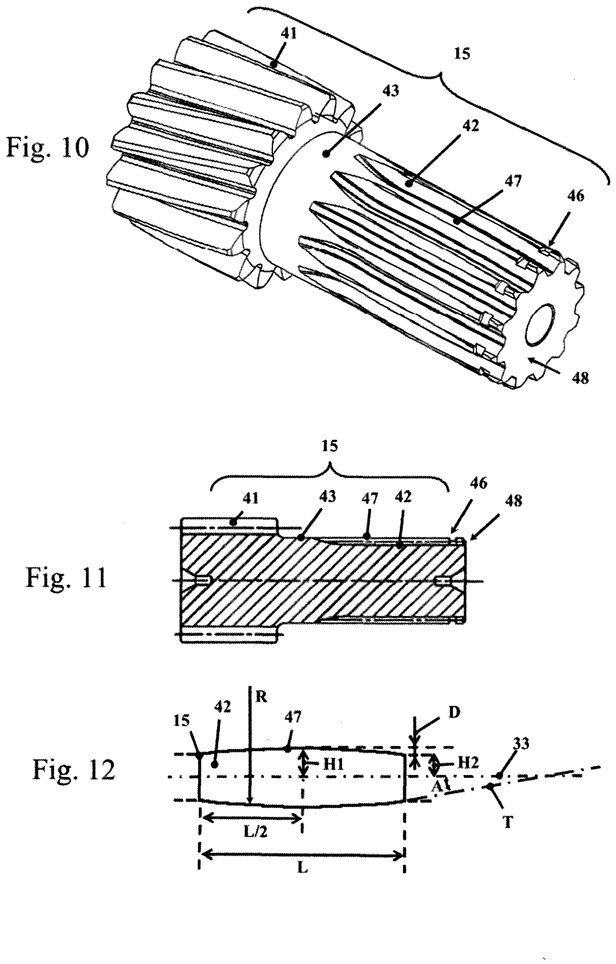

1, Fig. 6, Fig. 7) from the motor (6) with a first end (27), so as to create the coupling with the gear assembly (2) of the gear- reducing device (4), the coupling occurring between motor shaft (8), which also represents the coupling end (14) with the gears (2), and an input for operating the gears (2) of the gear- reducing device (4), which is made of a first rim (17) of the first reduction stage of the gears (2) in such a way that the rotation transferred to the motor shaft (8) by the relative motor (6) results in a corresponding rotation of the firs rim (17), which, in turn, causes the other gears (2) of the gear- reducing device (4) to rotate, so as to transfer the movement to the hub (1), which is integral with a driving wheel so as to move forward a respective (Fig. 11) electric-traction vehicle (31). The gears (2) include, besides the first rim (17), also one planetary stage pinion (15), rotating at the same speed as the first rim (17). With reference to the functioning of the gear-motor (5), a driving wheel is mounted on the respective hub (1), which is integrated with or, in any case, integral with a planetary gear support (11) of a second reduction stage of the gear- reducing device (4), such second reduction stage, being one planetary reduction stage. In the embodiment shown, the hub (1) is rotatably supported by the box (7), which represents the case of the gear-reducing device (4) by means of respective first roller bearings (36). The planetary gear support (11) is fixed (Fig. 1, Fig. 4, Fig. 7, Fig. 9) to the hub (1) by means of a blocking ring-nut (13) screwed on a corresponding threaded portion protruding from the hub (1). Internally and axially to the protrusion comprising the threaded portion, on the hub (1), a coupling seat (19) of the end of the pinion (15) is obtained. The planetary gear support (11), in turn, receives the movement (Fig. 1, Fig. 4, Fig. 7, Fig. 9) by means of planetary gears (12) of the second reduction stage, which, in the represented embodiment, they are three planetary gears inserting, each one by means of a respective second roller bearing (35), on the corresponding three engaging seats present on the planetary gear support (11). The planetary gears (12) of the second reduction stage gear (Fig. 1, Fig. 7) on the corresponding second rim (10) or rim of the planetary stage, which is fixed and which is mounted by means of a respective rim support disk (9). The rim support disk (9) is screwed on the box (7) of the gear-reducing device (4). The second rim (10) is fixed to the box (7) by means of a respective fixing ring or rim support disk (9). The planetary gears (12) receive (Fig. 1, Fig. 7) the movement by means of the pinion assembly (15) and of the first rim (17). The first toothed rim (17) is directly geared on the coupling end (14) directly obtained on the motor shaft (8) of the motor (6). All the gears of the gear- reducing device (4) are incorporated in a first chamber (18) or chamber of the gear- reducing device. A brake (3) or braking system acts (Fig. 1, Fig. 4, Fig. 7) on the motor shaft (8) for braking. It will be evident to a person skilled in the art that the brake (3) can be arranged in such a way to engage the motor shaft (8) on a second end (28), on the opposite side with respect to the fist end (27) of the motor shaft (8), coupling with the gear- reducing device (4), like in figure, but known and equivalent embodiments may be envisaged, in which the brake (3) is arranged in such a way to engage the motor shaft (8) at the same side of the motor shaft (8) which will couple with the gear-reducing device (4), that is at the first end (27).

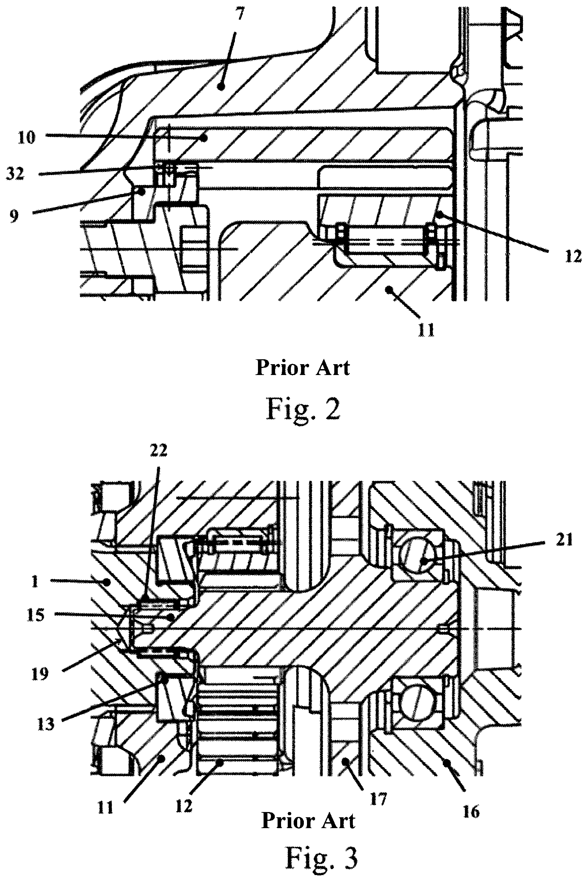

With particular reference to the solutions of the prior art (Fig. 1, Fig. 2, Fig. 3), the pinion (15) is an integral part of the rim (17), in such a way that the pinon (15) and the first rim (17) are a single body in which the pinion (15) is axially and centrally arranged with respect to the first rim (17) or first reduction stage rim of the gear- reducing device. The assembly of pinion (15) and first rim (17) is supported (Fig. 3) from the side opposite to the one where the pinion (15) is obtained, by means of a respective first ball bearing (21) of the pinion which is applied on a cover (16) of the gear- reducing device (4). The single body made up of the assembly of pinion (15) and first rim (17) is therefore rotatably supported by the cover (16) on a first side and by the hub (1) on a second opposite side through a second needle bearing (22).

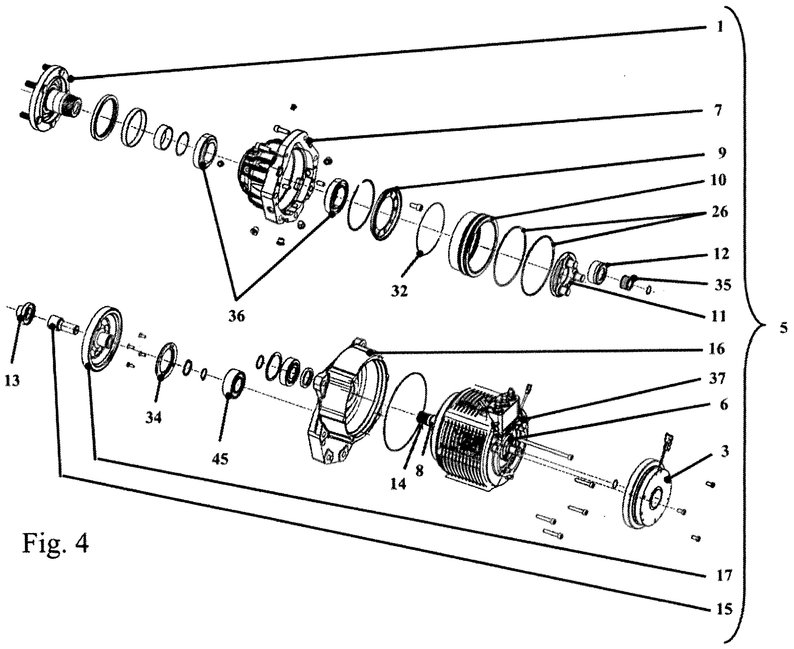

With reference to the figures (Fig. 4, Fig. 6, Fig. 7), the gear-motor (5) for direct transmission to the wheel according to the present invention, allows to obtain a single body made up of the gear-reducing device (4) and the motor (6), obtaining therefore a compact and resistant solution with all the advantages provided by a structure made in a single block, and, furthermore, it integrates systems and arrangements for the reduction of vibrations and stress which will be further described hereinafter.

Similarly to the solutions of the prior art, the motor (6) includes (Fig. 5, Fig. 6) a respective container (37) and the gear-motor (5) according to the invention includes (Fig. 7) a structural casing (25) of the gear-motor (5), which is made up of a first support case made up of a cover (16) and a second case made up of a box (7). The assembly of box (7) and cover (16) represents the overall cover or casing (25) which, together with the motor- container (37), contains both the motor (6) and the gear-reducing device (4) becoming integral part of the transmission. This solution advantageously allows the complete access inside the gear-motor (5), because, by disassembling the cover (16), the gear-motor (5) easily opens into two parts with the gear- reducing device (4) on one side, with complete access to its elements and the motor (6) on the other side.

The motor (6) advantageously includes (Fig. 5, Fig. 6), directly integrated on the respective container (37), a control connector (38) and a power supply terminal block (39), besides an encoder (40) for detecting the actual rotation speed.

Advantageously, in this way, it is possible to avoid all misalignment and inserting problems, which can be experienced during the installation of an external motor. The casing (25) includes one or more chambers which can be used as an oil reservoir and/or as a channel for oil recirculation, in case one is willing to use all the oil of the gear-reducing device for cooling purposes.

In the solution according to the present invention, the motor shaft (8) directly includes the coupling end (14) with the first reduction stage of the gear-motor (5). In fact, (Fig. 4, Fig. 7), the coupling end (14) of the motor shaft (8) is mechanically processed in order to obtain the engagement elements (20) between the motor (8) and the gears (2) of the gear-reducing device (4).

Furthermore, the motor shaft (8) also represents the joint element for applying the braking system. In fact, the brake (3) is obtained (Fig. 4, Fig. 7) in correspondence with the body of the motor itself from the opposite side with respect to the side of the motor in correspondence of which there are the engagement elements (20) of the coupling end (14) of the motor shaft (8). Also in this case, it will be evident to a person skilled in the art that known and equivalent embodiments may be provided, in which the brake (3) is arranged in such a way to engage the motor shaft (8) in correspondence with the same side of the motor shaft (8) coupling with the gear-reducing device (4).

The motor shaft (8) has a triple function:

- input gear of the gear-reducing device through the coupling end (14) of the motor shaft (8);
- actual motor shaft (8);
- application joint of the braking system (3).

Thanks to this solution it is possible to obtain a very compact and cheap transmission, which may reach almost absolute constructive accuracy limits: by obtaining the input gear of the gear- reducing device directly on the motor shaft (8), it is possible to increase the reduction ratio with the consequent possibility to increase the rotation speed of the motor (6) thanks to the particularly accurate constructive shape. In fact, the solution according to the invention is preferably conceived so as to provide the use of high-speed motors, which during their functioning, work, for example, at a speed of 8000-12000 rounds per minute. In order to reduce the noise up to a level similar to or lower than the level of the motors normally used in the prior art, working at a speed of 5000 rounds per minutes, it is essential that the accuracy of the first reduction stage is maximal and that the gear directly obtained on the motor shaft (8) is ground according to the highest accuracy standard.

In order to allow the use of a high-speed motor (6), it was necessary to study a technical solution to the problem of reducing the presence of flexing and/or deformations, which, besides an early wear of the components, they may cause unwanted high-frequency vibrations.

The use of a high-speed motor, for example a motor with a speed of 8000-12000 rounds per minute, allows many advantages:

- the motor is particularly compact and, therefore, cheap and lightweight. For example, the solution according to the present invention allows to use motors with high rotation speeds and particularly compact in such a way that the use of this motor allows to reduce by 40% the size, besides the connecting flange of the frame towards the inside of the machine with respect to a solution including a standard motor. Moreover, with respect to a solution including a standard motor, the use of this motor allows to work with a maximum input speed of the double transmission, that is an increase of 100%, with all its benefits, as explained in the present description;
- the maximum input torque is almost halved with respect to the configurations of the prior art, allowing the use of smaller gears for the gear-reducing device (4); in particular, the engagement elements (20) between motor and gears (2) of the gear-reducing device can be easily directly made on the motor shaft (8);
- the reducing ratio of the gear-reducing device (4) increases proportionally to the speed;
- by applying a dynamic service brake (3) or a holding brake, which acts on the motor shaft (8), with the same braking action, the brake (3) will have to develop a small braking torque.

The gear-motor (5) may or may not involve the use of oil bath motors, creating in this way a system in which the oil of the gear-reducing device re-circulates through suitable ducts, which do not touch the motor rotor, in order to perform a general cooling form of the gear-motor as a whole: in this way, the use of sealing gaskets between motor (6), gear-motor (5) and brake (3) can be avoided to the advantage of the mechanical efficiency.

Advantageously, the motor shaft (8), besides the previously described functions of motor shaft (8) and coupling element with gears (2) of the gear reducing device (4), further performs also the function of braking shaft, since the motor shaft (8) protrudes outside the body of the motor itself in correspondence with the opposite side with respect to the side on which there is the interface between motor (6) and gear reducing device (4), although embodiments in which the brake (3) is positioned in correspondence with the side on which there is the interface between motor (6) and gear-reducing device (4) are also possible. The brake or braking system (3) can be made, for example, in the form of the electromagnetic type.

The gear-motor (5) according to the invention (Fig. 7, Fig. 8, Fig. 9) integrates a series of different aspects contributing to achieve a gear-motor (5) suitable for the use with high- speed motors and which allows:

- the use of a planetary transmission with helical teeth;
- the use of a dampening system of the planetary rim;
- the use of a floating pinion, that is free both with respect to the wheel hub and with respect to the first transmission rim by means of coupling with grooved joint of the spherical type;

- a complete support of the first transmission rim by means of a double bearing with the advantage that, since the pinion is floating, the possible deformations of the box due to the load of the wheel do not cause a modification of the contact between pinion and rim, improving the quietness and reducing the wear;
- to optimize the first transmission in terms of helix angle, to correct of the ground profiles, to optimize the contact.

The term "floating" referred to the pinion (15), means that the pinion (15) is disengaged both from the wheel hub (1) and from the planetary gear support (11), and limitedly constrained to the first rim (17) only by means of a grooved joint (30) of the spherical type. Thanks to the fact that the pinion (15) is floating, the possible deformations of the box (7) due to the load of the wheel, do not cause an application of unwanted loads between the pinion (15) and first rim (17) with advantages both in terms of noise reduction and of increased reliability and of wear reduction. In the solutions of the prior art (Fig. 1, Fig. 3), the pinion (15) is constrained in a fixed position by means of bearings (21, 22), which only allow its rotation around its own axis. In this way, the gears of the gear-reducing device are sensitive with respect to the deformations of the box (7) caused by the load of the wheel acting on the hub (1) in different working conditions.

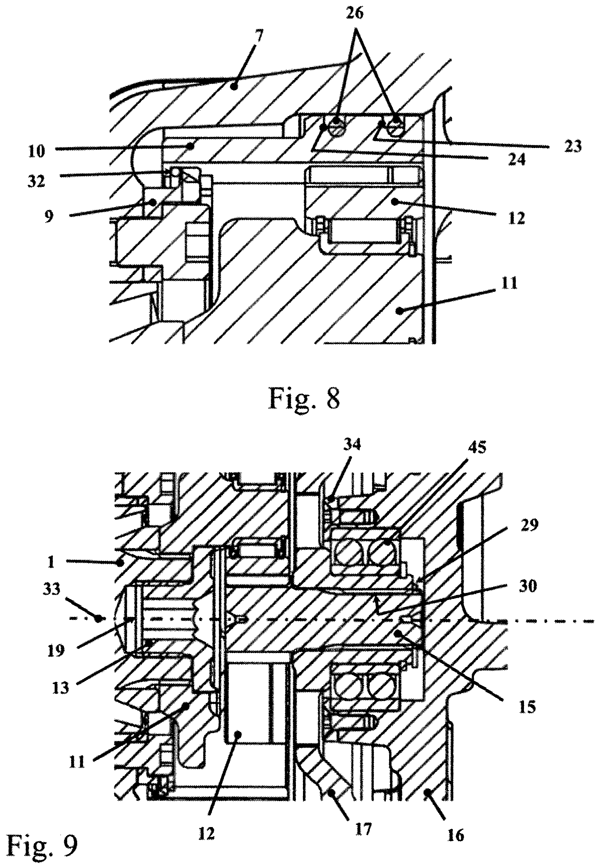

In the solution according to the invention (Fig. 9), the pinion (15) is not borne in a direct and constraining way by any bearing and is free to axially move along its own axis (33) in the limits imposed by a fixing ring (29). Moreover, the toothed joint (30) between pinion (15) and first rim (17) is of the "spherical" type, that is, it allows a limited oscillation of the axis (33) of the pinion (15) according to an angle (A). For example, the maximum oscillation angle (A) of the pinion (15) may be in a range from +/- 0.5° to +/- 4°, preferably in a range from +/- 1° a +/- 2°.

This ensures that the box (7) deformations or pinion (15) vibrations are not transmitted to the first rim (17), reducing in this way the noise of the gear-motor (5).

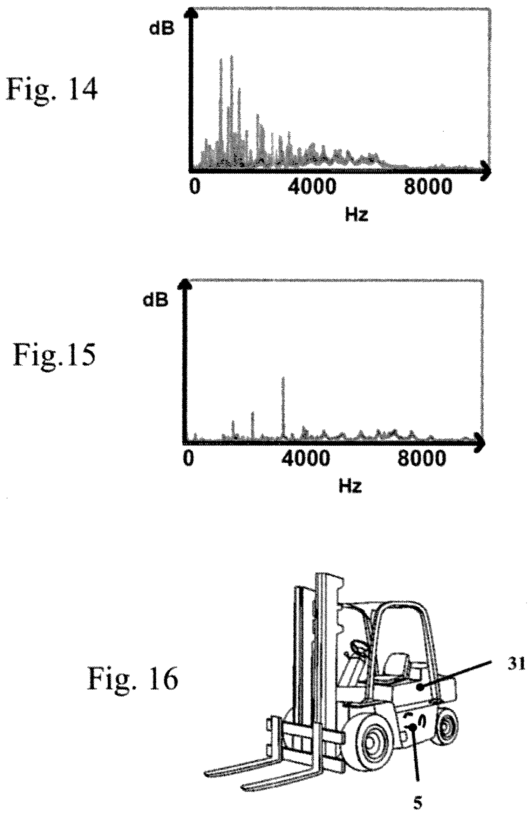

Experimental results (Fig. 14, Fig. 15) referred to the noise level generated by the gear-motor show a clear improvement with respect to the solutions of the prior art. In fact, in the solutions of the prior art (Fig. 14), noise levels are considerably higher with respect to noise levels obtained by experimental tests of the solution according to the invention (Fig. 15) made according to the present invention.

The second rim (10) of the planetary stage is fixed (Fig. 7, Fig. 8) to the box (7) by means of a rim support disk (9) which is connected to the second rim (10) by means of a wire (32) spring or elastic ring. Besides this (Fig. 8), the second rim (10) is provided with two grooves (23, 24) in each of which a corresponding O-Ring (26) is housed. The function of O-Rings (26) is to dampen the vibrations transmitted from the second rim (10) to the box (7). Since the second rim (10) does not rotate, being integral with the second case or box (7), O-Rings (26) push against the second rim (10) and the box (7), achieving the dampening effect of the vibrations. The second rim (10) and the box (7), therefore, are not in direct contact with each other, but the second rim (10) is supported by the box (7) by means of interposition of the O-Rings (26). For example, between the second rim (10) and the box (7) there is a minimum spacing of about 0.5 mm in order to assure the absence of direct contact between the two elements.

In order to achieve the described effect of oscillation of the axis (33) of the pinion (15), the pinion (15) includes a first portion (41) forming the interface for coupling with the planetary gears (12), which receive the movement by means of the assembly of pinion (15) and first rim (17), and further includes a second portion (42) forming the interface for coupling with the first rim (17). Between the first portion (41) and the second portion (42) there is preferably a third portion (43) for joining the configurations of first portion (41) and second portion (42). The first portion (41) preferably has a bigger diameter than the second portion (42).

The second portion (42) forming the interface for coupling with the first rim (17) is made in the form of a gear (Fig. 10, Fig. 11, Fig. 12) for coupling, obtained on a surface, cylindrical in shape, wherein the teeth (47) of the gear are convex towards the outside, having an arched convex profile, that is the teeth (47) have a first height (H1) in correspondence with a central area of the gear and are tapered at their ends, having a second height (H2) in correspondence with the end areas of the gear, in which the second height (H2) is smaller than the first height (H1). Preferably (Fig. 12), taking into consideration the length (L) of the tooth (47), the tooth (47) has a height corresponding to the first height (H1) in correspondence with L/2 and a height corresponding to the second height (H2) in correspondence with the terminal ends with respect to the length (L) of the tooth (47), according to a symmetrical configuration. Therefore, the height of the tooth (47) decreases in both directions with respect to the length (L) of the tooth (47) starting from the center of the tooth arranged at L/2, although in different embodiments there can also be an asymmetrical configuration having the first height (H1) off-centered with respect to the length (L) of the tooth (47).

The reduction of the height from the first height (H1) to the second height (H2), that is the difference (D) between the two heights of the tooth (47) is designed in such a way that the tangent to the convex profile of the tooth (47), at the ends of the tapering, has an angle equal to or greater than the previously defined angle (A) of maximum oscillation of the pinion (15). That is, the difference (D) between the first height (H1) and the second height (H2) is such that a tangent to the arched convex profile of the tooth (47) in correspondence with the ends of the tapering, is inclined of an angle equal to or greater than the angle (A) with respect to the axis (33) of the pinon (15).

As an example, by approximating (Fig. 12) for the sake of simplification the convex profile of the tooth (47) with an arc of a circle with a radius R and imposing that the tangent (T) of the convex profile of the tooth (47), in correspondence with the end of the tooth (47) is inclined with inclination equal to the angle (A), defining the difference (D) between the first height (H1) and the second height (H2), the following can be achieved:

$$D=H1-H2$$

$$L/2= Rb*\sin(A) \rightarrow Rb=L/(2*\sin(A))$$

$$D=Rb*(1-\cos(A)) \rightarrow Rb=D/(1-\cos(A))$$

$$D/(1-\cos(A))= L/(2*\sin(A))$$

$$D= L*(1-\cos(A))/ (2*\sin(A))$$

For example, by applying the formulas to the case of a tooth (47) having length (L) equal to 35 mm, we have that:

- in order to guarantee an oscillation equal to an angle (A) having a value of 0.5°, the value D must be equal to 0.076 mm;
- in order to guarantee an oscillation equal to an angle (A) having a value of 1°, the value D must be equal to 0.153 mm;
- in order to guarantee an oscillation equal to an angle (A) having a value of 2°, the value D must be equal to 0.305 mm;
- in order to guarantee an oscillation equal to an angle (A) having a value of 3°, the value D must be equal to 0.458 mm;
- in order to guarantee an oscillation equal to an angle (A) having a value of 4°, the value D must be equal to 0.611 mm.

For example, by applying the formulas to the case of a tooth (47) having length (L) equal to 45 mm, we have that:

- in order to guarantee an oscillation equal to an angle (A) having a value of 0.5°, the value D must be equal to 0.098 mm;
- in order to guarantee an oscillation equal to an angle (A) having a value of 1°, the value D must be equal to 0.196 mm;
- in order to guarantee an oscillation equal to an angle (A) having a value of 2°, the value D must be equal to 0.393 mm;
- in order to guarantee an oscillation equal to an angle (A) having a value of 3°, the value D must be equal to 0.589 mm;
- in order to guarantee an oscillation equal to an angle (A) having a value of 4°, the value D must be equal to 0.786 mm.

For example, by applying the formulas to the case of a tooth (47) having length (L) equal to 30 mm, we have that:

- in order to guarantee an oscillation equal to an angle (A) having a value of 0.5°, the value D must be equal to 0.065 mm;
- in order to guarantee an oscillation equal to an angle (A) having a value of 1°, the value D must be equal to 0.131 mm;
- in order to guarantee an oscillation equal to an angle (A) having a value of 2°, the value D must be equal to 0.262 mm;
- in order to guarantee an oscillation equal to an angle (A) having a value of 3°, the value D must be equal to 0.393 mm;
- in order to guarantee an oscillation equal to an angle (A) having a value of 4°, the value D must be equal to 0.524 mm.

The important value for defining the parameters related to the invention is the value of the difference (D) between first height (H1) and second height (H2) on the basis of which the oscillation angle (A) is defined, but absolute values of first height (H1) and of second height (H2) may be different and be selected according to the constructive needs, such as, for example, tolerances obtainable from processing machines and robustness.

By way of example, in case of a tooth (47) having length (L) equal to 35 mm, with oscillation equal to an angle (A) having a value of 1°, the value D will be equal to 0.153 mm, such a value can be achieved, for example, with values of first height (H1) equal to 0.765 mm and second height (H2) of 0.612 mm, but it will be clear that absolute values of first height (H1) and second height (H2) can be different, resulting anyway in the same difference (D) to which it corresponds the same oscillation angle (A). It will be possible to choose higher values of the first height (H1) to which higher values of the second height (H2) will correspond, so that the difference (D) is constant between first height (H1) and second height (H2), for example, in the described case, first height (H1) equal to 0.773 mm and second height (H2) of 0.620 mm, always obtaining a value of the difference (D) equal to 0.153 mm and an angle (A) of 1°. It will be possible to choose lower values of the first height (H1) to which lower values of the second height (H2) will correspond, so that the difference (D) is constant between first height (H1) and second height (H2), for example, in the described case, first height (H1) equal to 0.753 mm and second height (H2) of 0.600 mm, always obtaining a value of the difference (D) equal to 0.153 mm and an angle (A) of 1°.

The detail that makes the pinion (15) free to be subjected to the previously described inclination according to the angle (A) is the convex shape of the second portion (42) in the form of a gear, forming the interface for coupling with the first rim (17). This convex shape allows the indicated oscillation.

The first rim (17) is supported (Fig. 9) on the cover (16) by means of a support bearing (45), which is preferably a double-row-ball bearing. The support bearing (45) is kept in its fixing position (Fig. 4, Fig. 9) on the cover (16) by means of a respective flange (34). In this way, the first rim (17) is not subject to oscillations, but, thanks to its coupling with the floating and oscillating pinion (15), it is possible to obtain the desired effect of reduction of the stress due to possible mechanical deformations, with wear and noise reduction.

The previously described solution of interposition (Fig. 8) of O-Rings (26) between second rim (10) and box (7) also contributes to the noise reduction.

The fixing ring (29) present (Fig. 9) on the pinion (15) end at the end of the second convex portion (42) is arranged (Fig. 11) in a housing (46) obtained on the pinion (15) itself and, as previously explained, it limits the axial movement of the pinion (15) which, therefore, is floating and not supported in a direct and constraint way by any bearing, being free to axially move along its own axis (33) within the limits set by a fixing ring (29) and to incline according to the previously defined angle (A). Therefore, the teeth (47) of the second portion (42) include a housing (46) in correspondence with one terminal end (48) of the pinion (15), in which the housing (46) includes a fixing ring (29) arranged within the housing and developing circumferentially around the second portion (42), the fixing ring (29) limiting the axial movement of the pinion (15) with respect to the first rim (17).

For the purposes of the present invention, without limitation, examples of electric-traction vehicles on which the gear motor (5) according to the present invention are operating machines, lift trucks, tractors. Finally, the present invention refers (Fig. 16) also to an electric-traction vehicle (31) comprising at least one gear-motor (5) according to the present invention for direct transmission to the driving wheel of the electric-traction vehicle.

Ultimately, the present invention is related (Fig. 4, Fig. 7) to a gear reducing device (4) for a gear-motor (5) and corresponding gear-motor (5) for direct transmission to a driving wheel (Fig. 16) of an electric-traction vehicle (31) in which a driving motor (6) is suitable for coupling with the gear-reducing device (4) for forming an assembly of the gear-motor (5). The gear-reducing device (4) includes a supporting box (7) containing gears (2) of a planetary stage provided with a driving input for coupling with a motor shaft (8) of the traction motor (6). The gear-reducing device (4) comprising a hub (1) for supporting the driving-wheel. The gears (2) of the gear-reducing device (4) include a first rim (17) of a first reduction stage and a planetary gear support (11) provided with planetary gears (12) reciprocally coupled by means of a pinion (15) for transmission of motion from the first rim (17) to the planetary gear support (11). The pinion (15) is an independent floating element provided with a first toothed portion (41) for coupling with the planetary gears (12) of the planetary gear support (11) and of a second portion (42) opposite to the first portion (41) with respect to the development in length of the pinion (15) along its own axis (33), in which the second portion (42) is coupled to the first rim (17) by a grooved joint (30) of the spherical type, the coupling between pinion (15) and first rim (17) being such that the pinion (15) is free to axially move along its own axis (33) with an axial movement with respect to the first rim (17) and it is free to tilt on its axis (33).

The invention also refers to a gear-motor (5) for direct transmission to a driving-wheel of an electric-traction vehicle (31) in which a traction motor (6) is coupled with a gear-reducing device (4) for forming an assembly of the gear-motor (5), the gear-reducing device (4) comprising a support box (7) containing gears (2) of an epicyclical stage provided with a driving input for coupling with a motor shaft (8) of the traction motor (6), wherein the motor (6) is provided with respective motor shaft (8) provided with a first end (27) protruding with respect to a body of the traction motor (6) for coupling with the driving input of the gear-reducing device (4), the gear-reducing device (4) comprising a hub (1) for supporting the driving-wheel, the gears (2) of the gear-reducing device (4) including a first rim (17) of a first reduction stage and a planetary gear support (11) provided with planetary gears (12) reciprocally coupled by means of a pinion (15) for transmission of motion from the first rim (17) to the planetary gear support (11), wherein the gear-reducing device (4) is made according to what described.

The invention also refers to an electric- traction vehicle comprising at least one gear-motor (5) for direct transmission to a driving-wheel of an electric-traction vehicle (31) in which a traction motor (6) is coupled with a gear-reducing device (4) for forming an assembly of the gear-motor (5), the gear-reducing device (4) comprising a support box (7) containing gears (2) of an epicyclical stage provided with a driving input for coupling with a motor shaft (8) of the traction motor (6), wherein the motor (6) is provided with respective motor shaft (8) provided with a first end (27) protruding with respect to a body of the traction motor (6) for coupling with the driving input of the gear-reducing device (4), the gear-reducing device (4) comprising a hub (1) for supporting the driving-wheel, the gears (2) of the gear-reducing device (4) including a first rim (17) of a first reduction stage and a planetary gear support (11) provided with planetary gears (12) reciprocally coupled by means of a pinion (15) for transmission of motion from the first rim (17) to the planetary gear support (11), wherein the gear-reducing device (4) is made according to what described.

The description of the present invention has been made with reference to the enclosed figures in a preferred embodiment, but it is evident that many possible changes, modifications and variations will be immediately clear to those skilled in the art in the light of the foregoing description. Thus, it should be understood that the invention is not limited to the foregoing description, but embraces all such changes, modifications and variations in accordance with the appended claims.

NOMENCLATURE USED

With reference to the identification numbers reported in the enclosed figures, the following nomenclature has been used:

1. Hub
2. Gears
3. Brake or braking system
4. Gear-reducing device
5. Gear-motor
6. Motor
7. Second case or box
8. Motor shaft
9. Rim support disk
10. Second rim or planetary stage rim
11. Planetary gear support
12. Planetary gears
13. Ring-nut
14. Coupling end with first reduction stage
15. Pinion or planetary stage pinion
16. First support case or cover
17. First rim or first reduction stage rim
18. First chamber or chamber of the gear-reducing device
19. Coupling seat
20. Engagement elements
21. First ball bearing
22. Second needle bearing
23. First groove
24. Second groove
25. Casing
26. O-Ring
27. First end
28. Second end
29. Fixing ring
30. Joint
31. Vehicle
32. Wire spring or elastic ring
33. Axis
34. Flange
35. Second roller bearing
36. First roller bearing
37. Motor-container
38. Connector
39. Terminal block
40. Encoder
41. First portion
42. Second portion
43. Third portion
44. Phonic wheel
45. Support bearing

46. Housing
47. Tooth
48. Terminal end A. Angle
L. Length
H1. First height
H2. Second height
R. Radius
T. Tangent
D. Difference

**Claims**

1.   Gear-reducing device (4) for a gear-motor (5) for direct drive to a driving-wheel of an electric-traction vehicle (31) in which a traction motor (6) is intended to couple with the gear-reducing device (4) forming an assembly of the gear-motor (5), the gear-reducing device (4) comprising a support box (7) containing gears (2) of an epicyclical stage provided with a driving input for coupling with a motor shaft (8) of the traction motor (6), the gear-reducing device (4) comprising a hub (1) for supporting the driving-wheel, the gears (2) of the gear-reducing device (4) including a first rim (17) of a first reduction stage and a planetary gear support (11) provided with planetary gears (12) reciprocally coupled by means of a pinion (15) for transmission of motion from the first rim (17) to the planetary gear support (11), **characterised in that** the pinion (15) is an independent floating element released from the hub (1) of the wheel and from the planetary gear support (11), the pinion (15) being provided with a first toothed portion (41) for coupling with the planetary gears (12) of the planetary gear support (11) and of a second portion (42) opposite to the first portion (41) with respect to the development in length of the pinion (15) along its own axis (33), **in that** the second portion (42) is coupled to the first rim (17) by a grooved joint (30) of the spherical type, the second portion (42) being made in the form of a coupling gear obtained on a surface having a cylindrical shape in which teeth (47) of the gear are outwardly convex with an arched convex profile, the teeth (47) having a first height (H1) at a central part of the gear and being tapered at the ends with obtainment of a second height (H2) in correspondence of end zones of the gear in which the second height (H2) is smaller than the first height (H1), the coupling between pinion (15) and first rim (17) being such that the pinion (15) is floating and not supported in a direct and constraint way by any bearing, being free to axially move along its own axis (33) with an axial movement with respect to the first rim (17) and it is free to tilt on its axis (33), the teeth (47) of the second portion (42) including a housing (46) in correspondence of a terminal end (48) of the pinion (15), and **in that** the housing (46) includes a fixing ring (29) placed within the housing and circumferentially developing around the second portion (42), the fixing ring (29) limiting said axial movement of the pinion (15) with respect to the first rim (17).

2. Gear-reducing device (4) according to the previous claim, **characterised in that**
the pinion (15) is free to tilt on its axis (33) by an angle (A) between 0.5° and 4°, preferably between 1° and 2°.

3. Gear-reducing device (4) according to claim 2, **characterised in that**
the difference (D) between the first height (H1) and the second height (H2) is such that a tangent (T) to the arched convex profile of the tooth (47) in correspondence of the end of the tapering, is tilted by an angle equal to or higher than the angle (A) with respect to the axis (33) of the pinion (15).

4. Gear-reducing device (4) according to the previous claim, **characterised in that**
the difference (D) between the first height (H1) and the second height (H2) is calculated according to the formula $D = L*(1-\cos(A))/(2*\sin(A))$, in which L is the length of the second portion (42).

5. Gear-reducing device (4) according to any of the previous claims, **characterised in that**
the first rim (17) is supported by a support bearing (45).

6. Gear-reducing device (4) according to any of the previous claims, **characterised in that**
the gears (2) include a second rim (10) of the epicyclical stage in which the second rim (10) is fixed to the support box (7) of the gear-reducing device (4) by means of a rim support disk (9) which is connected to the second rim (10) by means of a wire spring (32) or elastic ring.

7. Gear-reducing device (4) according to the previous claim, **characterised in that**
the second rim (10) is provided with two grooves (23, 24) in each of which a respective O-ring (26) is housed for damping vibrations transmitted by the second rim (10) to the box (7), the second rim (10) and the box (7) being not in direct contact one another, but the second rim (10) being supported on the box (7) by means of the interposition of the O-rings (26).

8. Gear-motor (5) for direct drive to a driving-wheel of an electric-traction vehicle (31) in which a traction motor (6) is coupled to a gear-reducing device (4) forming an assembly of the gear-motor (5), in which the motor (6) is provided with respective motor shaft (8) provided with a first end (27) protruding with respect to a body of the traction motor (6) for coupling with the driving input of the gear-reducing device (4), **characterized in that**
the gear-reducing device (4) is made according to any of the previous claims.

9. Gear-motor (5) according to the previous claim, **characterised in that**
the box (7) of the gear-reducing device (4) is a structural supporting box intended to be fixed on the electric-traction vehicle constituting a body of the gear-reducing device, the box (7) defining at least a first chamber (18) or chamber of the gear-reducing device, the traction motor (6) having its own support case constituting a body of the motor which is fixed as a cover (16) to the box (7), the box (7) and the cover (16) constituting a single structural supporting casing (25) of the gear-motor (5), the cover (16) covering and enclosing the gear-reducing device (4) inside the box (7), the removal of the cover (16) allowing the free access to the gear-reducing device (4) on one side and to the motor (6) at the opposite side, in which the motor (6) couples to the gear-reducing device (4) by means of the first coupling end (27) of the motor shaft (8), the coupling between the motor (6) and the gear-reducing device (4) occurring without interposition of further transmission driving elements with obtainment of a direct coupling between motor (6) and gear-reducing device (4) in which the transmission shaft of the motor (6) directly couples to the driving input of the gears (2) of the gear-reducing device (4).

10. Gear-motor (5) according to any of the previous claims 8 to 9, **characterised in that** the motor shaft (8) includes, in correspondence of a second end (28), which is an opposite end of the motor shaft (8) with respect to the first end (27), coupling means with a braking system (3), the motor shaft thus constituting:

   i) the motor shaft of the motor (6);
   ii) one of the input gears of the gear-reducing device (4);
   iii) junction for application of the system braking system (3).

11. Gear-motor (5) according to the previous claim, **characterised in that**
the braking system (3) is an electromagnetic type brake.

12. Gear-motor (5) according to any of the previous claims 8 to 11, **characterised in that**
the motor (6) is a high-speed motor with rotational maximum speed with order of magnitude of 8000-12000 RPM.

13. Electric-traction vehicle, **characterised in that**

> it comprises at least one gear-motor (5) for direct drive to a driving-wheel of the electric-traction vehicle (31) in which a traction motor (6) is coupled to a gear-reducing device (4) forming an assembly of the gear-motor (5), **characterized in that**
> the gear-reducing device (4) is made according to any of the previous claims 1 to 7.

**Patentansprüche**

1. Untersetzungsgetriebe (4) für einen Getriebemotor (5) für den direkten Antrieb eines Antriebsrads eines Elektrofahrzeugs (31), wobei ein Fahrmotor (6) dazu bestimmt ist, mit dem Untersetzungsgetriebe (4) gekoppelt zu werden und eine Anordnung des Getriebemotors (5) bildet, wobei das Untersetzungsgetriebe (4) eine Stützbox (7) umfasst, die Getriebe (2) einer epizyklischen Stufe enthält, die mit einem Antriebseingang für die Kopplung mit einer Motorwelle (8) des Fahrmotors (6) versehen ist, wobei das Untersetzungsgetriebe (4) eine Nabe (1) zur Unterstützung des Antriebsrads umfasst, wobei die Getriebe (2) des Untersetzungsgetriebes (4) eine erste Felge (17) einer ersten Untersetzungsstufe und eine Planetengetriebehalterung (11) enthalten, die mit Planetengetrieben (12) versehen ist, die mittels eines Ritzels (15) gegenseitig gekoppelt sind, um die Bewegung von der ersten Felge (17) an die Planetengetriebehalterung (11) zu übertragen, **dadurch gekennzeichnet, dass**
   das Ritzel (15) ein unabhängiges schwebendes Element ist, das von der Nabe (1) des Rads und von der Planetengetriebehalterung (11) gelöst ist, wobei das Ritzel (15) mit einem ersten gezahnten Abschnitt (41) zur Kopplung mit den Planetengetrieben (12) der Planetengetriebehalterung (11) und einem zweiten Abschnitt (42) versehen ist, der dem ersten Abschnitt (41) in Bezug auf die Entwicklung der Länge des Ritzels (15) entlang seiner eigenen Achse (33) gegenüberliegt, dass der zweite Abschnitt (42) durch eine Nutverbindung (30) des kugelförmigen Typs mit der ersten Felge (17) gekoppelt ist, wobei der zweite Abschnitt (42) in Form eines Kopplungsgetriebes hergestellt ist, das auf einer Oberfläche mit einer zylindrischen Form erhalten wird, wobei die Zähne (47) des Getriebes nach außen konvex sind und ein gewölbtes konvexes Profil aufweisen, wobei die Zähne (47) eine erste Höhe (H1) in einem Mittelbereich des Getriebes aufweisen und sich an den Enden verjüngen, wodurch eine zweite Höhe (H2) in Übereinstimmung mit den Endzonen des Getriebes erreicht wird, wobei die zweite Höhe (H2) kleiner als die erste Höhe (H1) ist, wobei die Kopplung zwischen dem Ritzel (15) und der ersten Felge (17) so beschaffen ist, dass das Ritzel (15) schwebt und nicht direkt und einschränkend durch ein Lager getragen wird, so dass es sich frei entlang seiner eigenen Achse (33) mit einer axialen Bewegung in Bezug auf die erste Felge (17) axial bewegen kann und sich frei um seine Achse (33) neigen kann, wobei die Zähne (47) des zweiten Abschnitts (42) ein Gehäuse (46) in Übereinstimmung mit einem Anschlussende (48) des Ritzels (15) enthalten, und in dass das Gehäuse (46) einen Befestigungsring (29) enthält, der in dem Gehäuse angeordnet ist und sich um den zweiten Abschnitt (42) herum entwickelt, wobei der Befestigungsring (29) die besagte axiale Bewegung des Ritzels (15) in Bezug auf die erste Felge (17) begrenzt.

2. Untersetzungsgetriebe (4) nach dem vorhergehenden Anspruch, **dadurch gekennzeichnet, dass** das Ritzel (15) sich frei um seine Achse (33) um einen Winkel (A) zwischen 0,5° und 4° neigen kann, vorzugsweise zwischen 1° und 2°.

3. Untersetzungsgetriebe (4) nach Anspruch 2, **dadurch gekennzeichnet, dass**
   die Differenz (D) zwischen der ersten Höhe (H1) und der zweiten Höhe (H2) dermaßen ist, dass eine Tangente (T) an das gewölbte konvexe Profil des Zahns (47) in Übereinstimmung mit dem Ende der Verjüngung um einen Winkel geneigt ist, der dem Winkel (A) in Bezug auf die Achse (33) des Ritzels (15) entspricht oder größer ist.

4. Untersetzungsgetriebe (4) nach dem vorhergehenden Anspruch, **dadurch gekennzeichnet, dass** die Differenz (D) zwischen der ersten Höhe (H1) und der zweiten Höhe (H2) gemäß der Formel $D = L*(1 - \cos(A)) / (2*\sin(A))$ berechnet wird, wobei L die Länge des zweiten Abschnitts (42) ist.

5. Untersetzungsgetriebe (4) nach einem der vorhergehenden Ansprüche, **dadurch gekennzeichnet, dass**
   die erste Felge (17) von einem Stützlager (45) getragen wird.

6. Untersetzungsgetriebe (4) nach einem der vorhergehenden Ansprüche, **dadurch gekennzeichnet, dass**
   die Getriebe (2) eine zweite Felge (10) der epizyklischen Stufe enthalten, wobei die zweite Felge (10) mittels einer Felgenstützscheibe (9) an der Stützbox (7) des Untersetzungsgetriebes (4) befestigt ist, die mittels einer Drahtfeder (32) oder eines elastischen Rings mit der zweiten Felge (10) verbunden ist.

7. Untersetzungsgetriebe (4) nach dem vorhergehenden Anspruch, **dadurch gekennzeichnet, dass** die zweite Felge (10) mit zwei Nuten (23, 24) versehen ist, in denen jeweils ein entsprechender O-Ring (26) zur Dämpfung von Vibrationen untergebracht ist, die von der zweiten Felge (10) auf die Box (7) übertragen werden, wobei die zweite Felge (10) und die Box (7) nicht direkt miteinander in Kontakt stehen, aber die zweite Felge (10) mittels der Zwischenschaltung der O-Ringe (26) auf der Box (7) abgestützt wird.

8. Getriebemotor (5) für den direkten Antrieb eines Antriebsrads eines Elektrofahrzeugs (31), bei dem ein Fahrmotor (6) mit einem Untersetzungsgetriebe (4) gekoppelt ist und eine Anordnung des Getriebemotors (5) bildet, wobei der Motor (6) mit einer jeweiligen Motorwelle (8) ausgestattet ist, die mit einem ersten Ende (27) versehen ist, das in Bezug auf einen Körper des Fahrmotors (6) herausragt, um mit dem Antriebseingang des Untersetzungsgetriebes (4) gekoppelt zu werden, **dadurch gekennzeichnet, dass**
das Untersetzungsgetriebe (4) nach einem der vorhergehenden Ansprüche hergestellt ist.

9. Getriebemotor (5) nach dem vorhergehenden Anspruch, **dadurch gekennzeichnet, dass**
die Box (7) des Untersetzungsgetriebes (4) eine strukturelle Stützbox ist, die an dem Elektrofahrzeug befestigt werden soll und einen Körper des Untersetzungsgetriebes bildet; wobei die Box (7) mindestens eine erste Kammer (18) oder eine Kammer des Untersetzungsgetriebes definiert, wobei der Fahrmotor (6) ein eigenes Stützgehäuse aufweist, das einen Motorkörper bildet, der als Deckel (16) an der Box (7) befestigt ist, wobei die Box (7) und der Deckel (16) ein einziges strukturelles Stützgehäuse (25) des Getriebemotors (5) bilden, wobei der Deckel (16) das Untersetzungsgetriebe (4) im Inneren der Box (7) abdeckt und umschließt, wobei das Entfernen des Deckels (16) den freien Zugang zum Untersetzungsgetriebe (4) auf der einen Seite und zum Motor (6) auf der gegenüberliegenden Seite ermöglicht, wobei der Motor (6) mittels des ersten Kopplungsendes (27) der Motorwelle (4) mit dem Untersetzungsgetriebe (4) gekoppelt ist, wobei die Kopplung zwischen dem Motor (6) und dem Untersetzungsgetriebe (4) ohne Zwischenschaltung weiterer Antriebselemente erfolgt, wodurch eine direkte Kopplung zwischen dem Motor (6) und dem Untersetzungsgetriebe (4) hergestellt wird, wobei die Antriebswelle des Motors (6) direkt mit dem Antriebseingang der Getriebe (2) des Untersetzungsgetriebes (4) gekoppelt ist.

10. Getriebemotor (5) nach einem der vorhergehenden Ansprüche 8 bis 9, **dadurch gekennzeichnet, dass**
die Motorwelle (8) in Übereinstimmung mit einem zweiten Ende (28), das ein gegenüberliegendes Ende der Motorwelle (8) in Bezug auf das erste Ende (27) ist, Kopplungsmittel mit einem Bremssystem (3) umfasst, wodurch die Motorwelle Folgendes bildet:

> i) die Motorwelle des Motors (6);
> ii) eines der Eingangsgetriebe des Untersetzungsgetriebes (4);
> iii) die Anschlussstelle für die Anwendung des Systembremssystems (3).

11. Getriebemotor (5) nach dem vorhergehenden Anspruch, **dadurch gekennzeichnet, dass** das Bremssystem (3) eine elektromagnetische Bremse ist.

12. Getriebemotor (5) nach einem der vorhergehenden Ansprüche 8 bis 11, **dadurch gekennzeichnet, dass**
der Motor (6) ein Hochgeschwindigkeitsmotor mit einer maximalen Drehzahl in der Größenordnung von 8000-12000 U/min ist.

13. Elektrofahrzeug, **gekennzeichnet dadurch, dass**

es mindestens einen Getriebemotor (5) für den direkten Antrieb eines Antriebsrads des Elektrofahrzeugs (31) umfasst, wobei ein Fahrmotor (6) mit einem Untersetzungsgetriebe (4) gekoppelt ist und eine Anordnung des Getriebemotors (5) bildet, **dadurch gekennzeichnet, dass**
das Untersetzungsgetriebe (4) nach einem der vorhergehenden Ansprüche 1 bis 7 hergestellt ist.

## Revendications

1. Dispositif motoréducteur (4) pour un motoréducteur (5) pour transmission directe à une roue motrice d'un véhicule à traction électrique (31) où un moteur de traction (6) est destiné à l'accouplement au dispositif motoréducteur (4) formant un ensemble du motoréducteur (5), le dispositif motoréducteur (4) comprenant une boîte de support (7) contenant des engrenages (2) d'un étage épicycloïdal pourvu d'une entrée d'actionnement pour l'accouplement à un arbre moteur (8) du moteur de traction (6), le dispositif motoréducteur (4) comprenant un moyeu (1) pour supporter la roue motrice, les engrenages (2) du dispositif motoréducteur (4) incluant une première couronne (17) d'un premier étage de réduction et un support d'engrenages planétaires (11) pourvu d'engrenages planétaires (12) couplés réciproquement par un pignon (15) pour la transmission de mouvement de la première couronne (17) au support d'engrenages planétaires (11), **caractérisé en ce que**

le pignon (15) est un élément flottant indépendant libéré du moyeu (1) de la roue et du support d'engrenages planétaires (11), le pignon (15) étant pourvu d'une première portion dentée (41) pour l'accouplement aux engrenages planétaires (12) du support d'engrenages planétaires (11) et d'une deuxième portion (42) opposée à la première portion (41) par rapport au développement en longueur du pignon (15) le long de son axe longitudinal (33), **en ce que** la deuxième portion (42) est couplée à la première couronne (17) par un joint rainuré (30) du type sphérique, la deuxième portion (42) étant réalisée sous la forme d'un engrenage d'accouplement obtenu sur une surface ayant une forme cylindrique où les dents (47) de l'engrenage sont convexes vers l'extérieur avec un profil convexe arqué, les dents (47) ayant une première hauteur (H1) à une partie centrale de l'engrenage et étant effilées aux extrémités avec obtention d'une deuxième hauteur (H2) au niveau de zones d'extrémité de l'engrenage où la deuxième hauteur (H2) est inférieure à la première hauteur (H1), l'accouplement entre le pignon (15) et la première couronne (17) étant tel que le pignon (15) est flottant et n'est pas supporté de manière directe et contrainte par un palier, étant libre de se déplacer axialement le long de son propre axe (33) avec un mouvement axial par rapport à la première couronne (17) et il est libre de s'incliner sur son axe (33), les dents (47) de la deuxième portion (42) incluant un logement (46) au niveau d'une extrémité terminale (48) du pignon (15), et **en ce que** le logement (46) inclut une bague de fixation (29) placée à l'intérieur du logement et se développant circonférentiellement autour de la deuxième portion (42), la bague de fixation (29) limitant ledit mouvement axial du pignon (15) par rapport à la première couronne (17).

**2.** Dispositif motoréducteur (4) selon la revendication précédente, **caractérisé en ce que**
le pignon (15) est libre de s'incliner sur son axe (33) d'un angle (A) entre 0,5° et 4°, de préférence entre 1° et 2°.

**3.** Dispositif motoréducteur (4) selon la revendication 2, **caractérisé en ce que**
la différence (D) entre la première hauteur (H1) et la deuxième hauteur (H2) est telle qu'une tangente (T) au profil convexe arqué de la dent (47) au niveau de l'extrémité de l'effilement, est inclinée d'un angle égal ou supérieur à l'angle (A) par rapport à l'axe (33) du pignon (15).

**4.** Dispositif motoréducteur (4) selon la revendication précédente, **caractérisé en ce que**
la différence (D) entre la première hauteur (H1) et la deuxième hauteur (H2) est calculée selon la formule D= L*(1-cos(A)) / (2*sin (A)), où L est la longueur de la deuxième portion (42).

**5.** Dispositif motoréducteur (4) selon l'une quelconque des revendications précédentes, **caractérisé en ce que**
la première couronne (17) est supportée par un palier de support (45).

**6.** Dispositif motoréducteur (4) selon l'une quelconque des revendications précédentes, **caractérisé en ce que**
les engrenages (2) incluent une deuxième couronne (10) de l'étage épicycloïdal où la deuxième couronne (10) est fixée à la boîte de support (7) du dispositif motoréducteur (4) au moyen d'un disque de support de couronne (9) qui est relié à la deuxième couronne (10) par un ressort à fil (32) ou anneau élastique.

**7.** Dispositif motoréducteur (4) selon la revendication précédente, **caractérisé en ce que**
la deuxième couronne (10) est pourvue de deux rainures (23, 24) dans chacune desquelles est logé un joint torique (26) respectif pour amortir les vibrations transmises par la deuxième couronne (10) à la boîte (7), la deuxième couronne (10) et la boîte (7) n'étant pas en contact direct l'une par rapport à l'autre, mais la deuxième couronne (10) étant supportée sur la boîte (7) au moyen de l'interposition des joints toriques (26).

**8.** Motoréducteur (5) pour transmission directe à une roue motrice d'un véhicule à traction électrique (31) où un moteur de traction (6) est couplé à un dispositif motoréducteur (4) formant un ensemble du motoréducteur (5), où le moteur (6) est pourvu d'un arbre moteur (8) respectif pourvu d'une première extrémité (27) faisant saillie par rapport à un corps du moteur de traction (6) pour l'accouplement à l'entrée d'actionnement du dispositif motoréducteur (4), **caractérisé en ce que**
le dispositif motoréducteur (4) est réalisé selon l'une quelconque des revendications précédentes.

**9.** Motoréducteur (5) selon la revendication précédente, **caractérisé en ce que** la boîte (7) du dispositif motoréducteur (4) est une boîte de support structurel apte à être fixée sur le véhicule à traction électrique constituant un corps du dispositif motoréducteur, la boîte (7) définissant au moins une première chambre (18) ou chambre du dispositif motoréducteur, le moteur de traction (6) ayant son propre enveloppe de support constituant un corps du moteur qui est fixé comme un couvercle (16) à la boîte (7), la boîte (7) et le couvercle (16) constituant un seul enveloppe de support structurel (25) du motoréducteur (5), le couvercle (16) recouvrant et enfermant le dispositif motoréducteur (4) à l'intérieur de la boîte (7), l'enlèvement du couvercle (16) permettant l'accès libre au dispositif motoréducteur (4) d'un côté et au moteur (6) du côté opposé, où le moteur (6) est couplé au dispositif motoréducteur (4) par la première extrémité d'accouplement (27) de l'arbre moteur (8), l'accouplement entre le moteur (6) et le dispositif motoréducteur (4) s'effectuant sans interposition d'éléments d'actionnement de transmission supplémentaires avec obtention d'un accouplement direct entre le moteur (6) et le dispositif motoréducteur (4) où l'arbre de transmission du moteur (6) est directement accouplé à l'entrée d'actionnement des engrenages (2) du dispositif motoréducteur (4).

10. Motoréducteur (5) selon l'une quelconque des revendications précédentes 8 à 9, **caractérisé en ce que**
l'arbre moteur (8) inclut, au niveau d'une deuxième extrémité (28), qui est une extrémité opposée de l'arbre moteur (8) par rapport à la première extrémité (27), des moyens d'accouplement avec un système de freinage (3), l'arbre moteur constituant ainsi :

i) l'arbre moteur du moteur (6) ;
ii) l'un des engrenages d'entrée du dispositif motoréducteur (4) ;
iii) jonction pour l'application du système de freinage (3).

11. Motoréducteur (5) selon la revendication précédente, **caractérisé en ce que** le système de freinage (3) est un frein de type électromagnétique.

12. Motoréducteur (5) selon l'une quelconque des revendications précédentes 8 à 11, **caractérisé en ce que**
le moteur (6) est un moteur à grande vitesse avec vitesse de rotation maximale de l'ordre de 8 000 à 12 000 tr/min.

13. Véhicule à traction électrique, **caractérisé en ce que**

il comprend au moins un motoréducteur (5) pour transmission directe à une roue motrice du véhicule à traction électrique (31) où un moteur de traction (6) est couplé à un dispositif motoréducteur (4) formant un ensemble du motoréducteur (5), **caractérisé en ce que**
le dispositif motoréducteur (4) est réalisé selon l'une quelconque des revendications précédentes 1 à 7.

**Prior Art**

Fig. 1

Prior Art

Fig. 2

Prior Art

Fig. 3

Fig. 4

Fig. 5

Fig. 6

Fig. 7

Fig. 8

Fig. 9

Fig. 10

Fig. 11

Fig. 12

Fig. 13

Fig. 14

Fig.15

Fig. 16

**EP 4 551 840 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007022865 A
- WO 2013102484 A
- US 2939346 A
- US 4090416 A